# EUROPEAN PATENT APPLICATION

(11) **EP 4 790 863 A1**
(43) Date of publication of application: **12.08.2026**
(21) Application number: 26156587.3
(22) Date of filing: 05.02.2026
(51) Int. Cl.: H02J 3/01, D06F 37/42, A47L 15/42, A47L 15/46, H02M 1/12, D06F 34/10, D06F 34/20

(54) **CONTROL CIRCUIT FOR A HOUSEHOLD APPLIANCE**

(30) Priority: 11.02.2025 IT 202500002541
(71) Applicant: Beko Europe Management S.r.l., 20156 Milano (IT)
(72) Inventor: POSSANZA, Mauro, 20156 Milano (IT); BURZELLA, Luciano, 20156 Milano (IT)
(74) Representative: Buzzi, Notaro & Antonielli d'Oulx S.p.A.

(57) **Abstract**

Circuit for controlling a household appliance, particularly a washing machine, a dishwasher, or a dryer, provided with a power plug which can be inserted in two different positions into a corresponding electrical power supply socket, provided with a detection circuit (FB_DOOR LOCK) of the state of a first switch controlled by a door lock (DOOR_LOCK) powered with a low voltage generator VCC1, a first capacitor (C39) electrically connected downstream of a motor power supply, between the motor and the electrical ground line (G) of the circuit, and further comprising a second capacitor (CX) electrically connected downstream of the first switch controlled by the door lock (DOOR_LOCK), between a sampling point of the detection circuit (FB_DOOR LOCK) of the state of the first switch controlled by the door lock (DOOR_LOCK) and the low voltage generator (VCC1).

## Description

### Field of the invention

The subject of the present invention is a control for a household appliance, in particular for a laundry washing machine, a dryer, or a dishwasher. More specifically, the subject of the present invention is a control for a laundry washing machine, a dryer, or a dishwasher with a good degree of immunity to conducted electromagnetic emissions and wherein false signals of a closed locked door are eliminated, while containing costs.

### State of the art

Control circuits for washing machines configured with X-type capacitors connected between line and neutral and Y-type capacitors connected between suitable points of the circuit and ground are known in the art, suitable for suppressing electromagnetic interference at the frequencies of interest by discharging the parasitic currents produced in the circuit towards the other phase or towards ground/earth.

Said capacitors have high capacitance in proportion to the degree of immunity to electromagnetic interference that must be guaranteed, particularly with respect to conducted emissions. However, these known circuits may exhibit asymmetrical electrical behavior when the power plug of the household appliance, through which the control circuit is powered, is inserted into the domestic power outlet from the mains in the two different possible insertion positions.

For example, inserting the appliance plug into the power outlet in a first plug connection mode, compared to its "reversed" position, can lead to the detection of a false door lock signal when the door is actually unlocked, with consequent repercussions on the correct operation of the appliance. This problem is caused by the circulation of parasitic currents in the circuit which cause undesirable effects on the door closure detection circuit.

It should be noted that this problem is particularly relevant when the connection of phase and neutral of the domestic power line to the terminals of the domestic outlets, through which the control circuits of household appliances, in particular laundry washing machines, dryers, and dishwashers are powered, is not known, i.e., when plugs and sockets are not polarized for insertion.

US 2010/0251776 A1 discloses a circuit for operating a household appliance comprising a power supply that generates a DC voltage for a control unit, as well as an EMC filter with a capacitor and a discharge resistor, wherein an electrical switch that enables to connect/disconnect the EMC filter and the loads from the mains and the supply of various users is implemented by means of respective switches. The document further discloses a safety management related to the appliance door, with a closed-door contact, a door-locking device and a switch on the phase line that can be actuated only when the door is locked; the state of said switch is detected by the control unit via a status line. A motor and a valve are controlled by means of triacs, when the switch on the phase line is closed.

US 2005/0113980 A1 discloses a power supply unit for household appliances which integrates a disturbance suppression filter and a disconnection device from the mains power supply that can be controlled automatically. In one embodiment, two main switches are inserted on the supply lines (phase and neutral) upstream of the filter, driven by means of a relay and a control logic unit.

### Summary of the invention

The present invention is particularly advantageous for the control of household appliances, in particular washing machines, dryers, or dishwashers, in which the electrical loads, in particular at least the appliance motor and/or its drive circuit, are powered from a first line/phase of the mains power supply via a switch controlled by the door lock of the appliance door, and where there is also a second switch that connects or interrupts the electrical connection of the same electrical loads to the second line/phase of the mains power supply, so as to allow the disconnection of both power supply lines/phases of the appliance's electrical loads from the power mains.

In said circuits, a circuit for detecting the state of the door lock switch that powers or interrupts the power supply to the electrical loads, i.e., the unlocked or locked state of the door, is normally present, which can detect false signals.

The invention aims to overcome this drawback. This aim is achieved by the features listed in the attached claims.

### Brief description of the drawings

Further advantages and features according to the present invention will be evident from the following detailed description, provided by way of non-limiting example only, with reference to the accompanying drawings wherein:
- Figure 1 schematically represents a schematic drawing of a control of a washing machine known in the art and connected to the domestic power mains in a first connection mode;
- Figure 2 represents the signals detectable by the circuit for detecting the door state sampled in the circuit of Fig. 1, when the switch controlled by the door lock DOOR_LOCK is actually closed and the second switch K003 is open;
- Figure 3 represents the signals detectable by the circuit for detecting the door state in the circuit of Fig. 1 when the control circuit is connected in the first connection mode and where the switch controlled by the door lock DOOR_LOCK is open and the second switch K003 is also open;
- Figure 4 schematically represents a schematic drawing of a control circuit of a washing machine according to the invention and connected to the domestic power mains in a first connection mode;
- Figure 5 represents a signal detected by the circuit for detecting the door state in the circuit of Fig. 4 when the control circuit is connected in the first connection mode and the switch controlled by the door lock DOOR_LOCK is open and the second switch K003 is also open;
- Figure 6 represents a variant of the washing machine control circuit schematized in Fig. 4, wherein a further resistor R is present to limit the initialization current flowing in the second shunt capacitance CX;
- Figure 7 represents an implementation diagram of the resistor R by means of a redundant distribution of SMD resistors.

### Description of preferred embodiments

With reference to the aforementioned figures, a control circuit for a household appliance according to the invention is described.

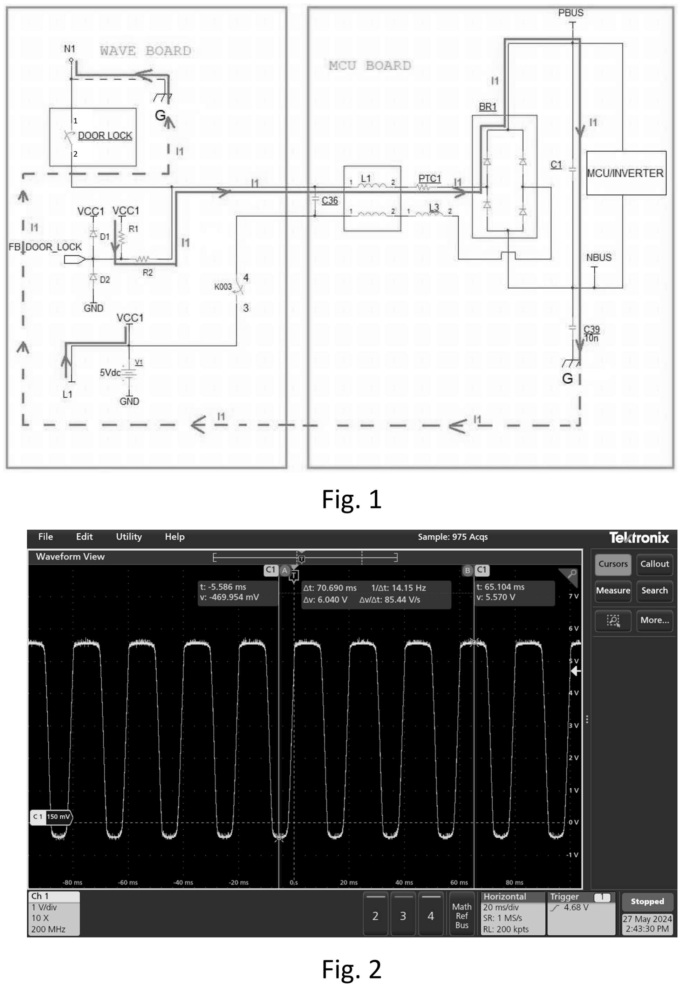

In Fig. 1, the schematic circuit known in the art for controlling a domestic washing machine powered via a power plug to a single-phase power outlet is shown, in a first plug connection mode. Typically, the single-phase line provides a mains voltage of 230 Volts at 50Hz frequency. However, other single-phase or polyphase power lines are compatible for the purposes of the present invention.

The socket connected to the mains power line connects at least one phase line L1, a neutral line N1 and usually also an electrical ground connection G (an electrical ground or heart line).

In domestic installations, the neutral line N1 is typically connected to the ground connection G, as indicated in Fig. 1, via a connection made on the electrical power distribution network, external to the domestic installation.

In the first connection mode of the plug to the socket, a first terminal 1 of a switch controlled by the door lock DOOR_LOCK is connected to the neutral line N1 of the mains power line, while a second terminal 2 of the same switch is connected to the drive/control circuit of the washing machine motor and/or directly to the motor itself, providing a first phase/line of electrical power when the switch of the door lock DOOR_LOCK is closed.

The switch controlled by the door lock DOOR_LOCK is closed when the washing machine door is closed and locked.

The switch controlled by the door lock DOOR_LOCK is open when the washing machine door is not locked. This typically occurs when the door is open, or when the door is closed but not locked.

When the switch controlled by the door lock DOOR_LOCK is open, the power supplies to the electrical loads downstream of the switch, in particular to the drive circuit of the motor and/or to the motor itself, are interrupted.

Preferably, the motor of the washing machine is a three-phase motor, and the motor driving circuit MCU/INVERTER is an inverter-type driving circuit, provided with a bridge rectifier BR1 to which a bulk capacitor C1, also known as a DC bus capacitor, is connected.

According to the invention, the washing machine control circuit further comprises a circuit for detecting the state of the switch controlled by the door lock FB_DOOR LOCK powered by a low voltage VCC1, typically a direct voltage of 5 Volts. Said low voltage VCC1 is generated within the board itself, in a known manner.

Usually, the control circuit also includes a common mode filter, in turn comprising a common mode inductor L1, and a common mode filter capacitor C36, to further improve the immunity performance of the circuit.

In the first connection mode, the phase line L1 of the power line is electrically connected together with the low voltage circuit generator VCC1.

The circuit for detecting the state of the door lock switch FB_DOOR LOCK preferably includes a voltage divider R1, R2 and two protection diodes D1 and D2 against over-voltages. The circuit is connected to a digital input of a microcontroller (not shown). Preferably, R1 is 1000k Ohm and R2 is 27k Ohm.

According to the invention, the washing machine control circuit includes a second switch K003 that supplies or interrupts a second phase/line of electrical power to the electrical load, in particular to the motor drive circuit of the washing machine and/or to the motor itself.

In the first connection mode described in Fig. 1, a first terminal 3 of the second switch K003 is connected to the line L1 of the mains power supply, while the second terminal 4 of the second switch K003 is connected to the motor drive/control circuit MCU/INVERTER and/or directly to the motor, providing the second line/phase of electrical power when the second switch K003 is closed.

When the door lock is unlocked, that is when the switch controlled by the door lock DOOR_LOCK is open and also when the second switch K003 is open, the motor drive circuit and/or the motor itself are completely de-energized.

This configuration allows the disconnection of both power supply phases to the motor drive circuit and/or the motor itself, especially when the motor must not be activated, and saves standby current. This increases the degree of electrical isolation and safety of the circuit, reducing consumption.

As can be inferred, the switch controlled by the door lock device DOOR_LOCK and the second switch K003 provide connection means for the circuit, that allow the supply of power to the electrical load represented by the motor.

Preferably, the circuit for detecting the door state FB_DOOR LOCK is located on a first electronic board ACU BOARD preferably placed in the vicinity of the door, while the washing machine motor drive/control circuit is located on a second electronic board MCU BOARD electrically connected to the first, the second electronic board preferably placed in the vicinity of the motor.

According to the invention, the washing machine control circuit includes a first Y-type capacitor C39 arranged between the negative pole of a bulk capacitor C1 and the ground connection G. The bulk capacitor C1, also known as a DC bus capacitor, powers the inverter circuit. The Y-type capacitor C39 is suitable for filtering parasitic currents at high frequencies, so as to ensure EMC immunity for the appliance regarding conducted emissions, as required by regulations. Preferably the bulk capacitor C1 has a capacitance of about 220 uF, while the Y-type capacitor C39 is less than 100 nF, preferably about 10nF.

In this first connection mode, when the switch controlled by the door lock DOOR_LOCK is closed, regardless of the state of the second switch K003, the circuit for detecting the door state FB_DOOR LOCK detects an oscillating signal proportional to that of the mains power supply. The trend of this signal is illustrated in Fig. 2.

The same signal of Fig. 2 is also detected by the circuit for detecting the door state FB_DOOR LOCK when the power plug of the appliance through which the control circuit is powered is inserted into the socket in a "reversed" position relative to the first connection mode illustrated in Fig. 1.

In this second reversed plug insertion mode (not illustrated), the washing machine control circuit is connected to the power mains in the connection mode alternative to the first. In particular, in the second reversed connection mode, the first terminal 1 of the switch controlled by the door lock DOOR_LOCK is connected to the phase line L1 of the mains power line, while the first terminal 3 of the second switch K003 is connected to the neutral line N1 of the mains power supply.

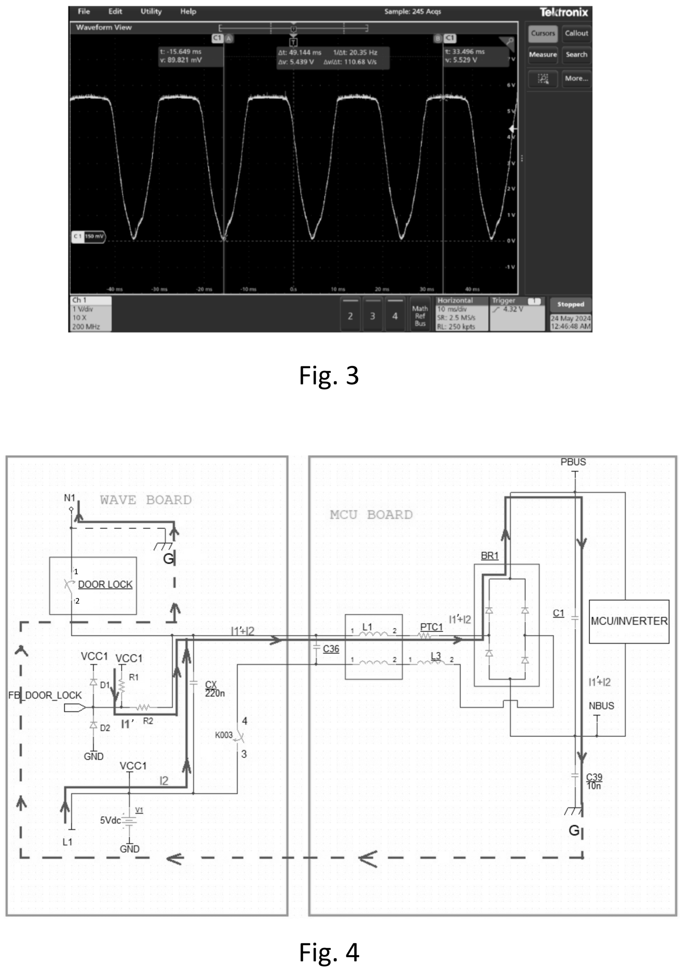

However, when, as illustrated in Fig. 1, the control circuit is connected to the mains socket in the first connection mode and the switch controlled by the door lock DOOR_LOCK is open and the second switch K003 is also open, the circuit for detecting the door state FB_DOOR LOCK also detects a widely oscillating signal proportional to that of the mains power supply, shown in Fig. 3, thereby identifying a false door closed condition not discriminable via the digital input of a microcontroller, compared to the previously described signal of an actually locked door.

This undesirable effect is induced by the conducted parasitic currents 11, whose closed path is illustrated with dashed lines in Fig. 1.

According to the invention and as shown in Fig. 4, the addition in the circuit of Fig. 1 of a second capacitor CX, called a shunt capacitor, connected between the sampling point of the circuit for detecting the door state FB_DOOR LOCK downstream of the switch controlled by the door lock DOOR_LOCK and the low voltage circuit generator VCC1, solves the problem in the case where the control circuit is powered according to the first plug connection mode to the socket, particularly when the switch of the door lock DOOR_LOCK controlled by the washing machine door and the second switch K003 are both open. The second capacitor CX is a shunt capacitor.

In this case of insertion of the plug into the socket in the first connection mode illustrated in Fig. 4, the second shunt capacitor CX is directly connected on one side directly to the phase line L1, upstream of the second switch K003. On the other side the second shunt capacitor CX is connected downstream of the switch controlled by the door lock DOOR_LOCK, which is connected to the neutral line N1, only when the switch controlled by the door lock DOOR_LOCK is closed.

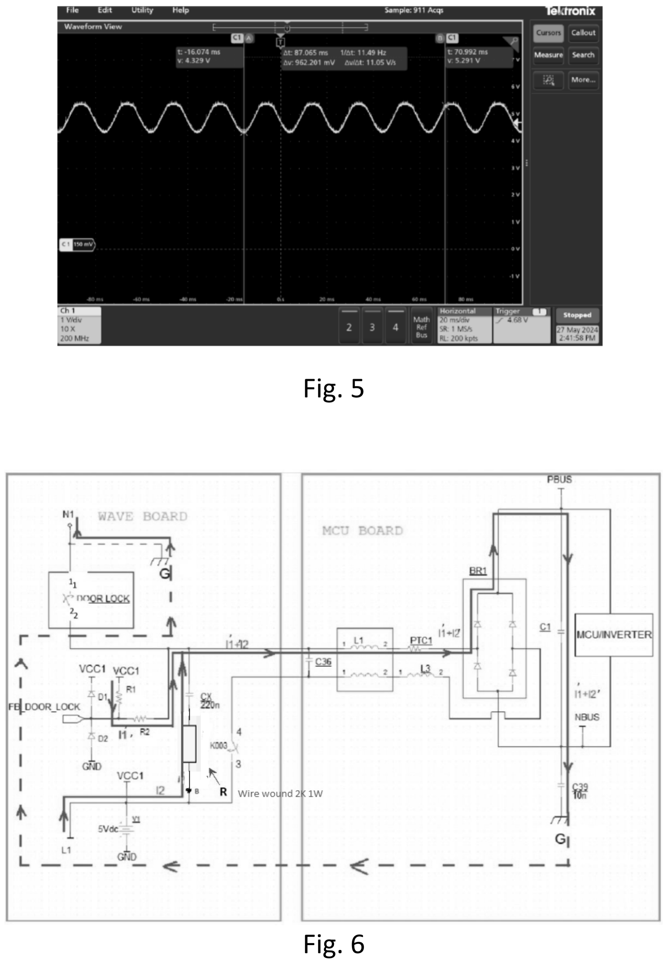

As shown in Figure 4, in the first connection mode of the plug into the mains power socket, when the switch controlled by the door lock DOOR_LOCK and the second switch K003 are open, the addition of the second shunt capacitor CX creates, at the frequencies of interest, a diversified path for the parasitic currents 11', I2, and I1'+ I2 which has the final effect of attenuating the signal detected by the circuit for detecting the door state FB_DOOR LOCK, illustrated in Fig. 5, thereby mitigating the undesirable effect of a false door locked signal.

According to the invention, thanks to the presence of the second shunt capacitor CX, in the first connection mode of the plug to the socket, when the switch of the door lock DOOR_LOCK and the second switch K003 are open, the feedback door lock circuit FB_DOOR_LOCK thus detects an oscillating signal with an amplitude lower than that of the circuit lacking the second shunt capacitor CX and discriminable relative thereto, taking into account circuit tolerances and mains voltages.

In more detail, when the switch controlled by the door lock DOOR_LOCK and the second switch K003 are both open, the first parasitic current I1' flowing through the circuit of the detection circuit of the door state FB_DOOR LOCK is attenuated compared to the corresponding parasitic current I1 of the circuit in Fig. 1 where the second shunt capacitor CX is not present.

The presence of the second shunt capacitor CX does not negatively influence the behavior of the door detection circuit DOOR_FEEDBACK when the plug is inserted into the socket in the second reversed connection mode. In this case therefore the presence of the second shunt capacitor is irrelevant.

The size of this second shunt capacitance CX is lower than that of the first capacitor C39, preferably 220 nF, when C39 is equal to 10nF.

The addition of the second shunt capacitor CX does not then require further increasing the capacitance of the first capacitor C39, nor does it require oversizing the common mode filter (L1 and C36), if present.

According to the invention, the Y-type capacitor C39 is of smaller size compared to known circuits where the shunt capacitor CX is not present, for the same degree of immunity to conducted electromagnetic emissions.

The second shunt capacitance CX can be physically positioned either on the first ACU board or on the second MCU board. Preferably, the second shunt capacitance CX is positioned on the second MCU board, so that it can be sized according to the characteristics of the motor control/drive circuit and the motor itself, and physically associated and placed on the same board with them.

This association creates interchangeability between the motor control part, the motor itself and the rest of the washing machine control which may be located in a position different from the motor, in particular on a board that incorporates the user interface. The control configuration on two different boards allows the washing machine control to be associable with different types of motor, each of these preferably supplied together with its own drive/control circuit.

In some embodiments of the circuit according to the invention, the high current flowing in the second shunt capacitor CX during the circuit initialization phase (in-rush current) could create induced disturbances in circuit components near the current path, in particular in logic circuits. In these cases it might be useful or necessary to introduce at least one resistor R in series with the second shunt capacitor CX, aimed at limiting the intensity of said current, so as to eliminate the induced electromagnetic disturbances.

The value of said resistor therefore depends on the topology of each individual circuit and can be defined by a value that keeps the disturbances induced by the initialization current below a threshold of induced disturbance to the logic circuit, at least according to the requirements of the regulations for immunity to electromagnetic disturbances. Preferably the resistor R has a value between 1 and 3 kOhm, more preferably 2 kOhm.

Preferably, the resistor R is implemented by using at least two resistors in parallel with each other so as to create redundancy and obtain greater circuit robustness (increased fault tolerance) in case one of the two resistors should fail. Alternatively, a single "Wire wound" resistor could be used.

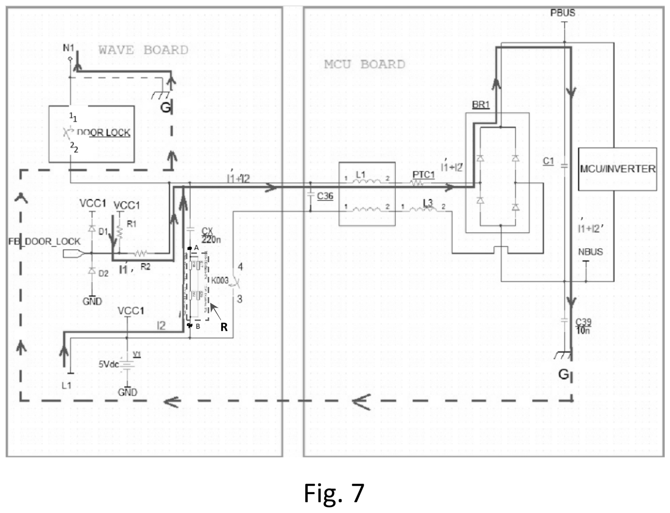

More preferably, the resistor R could be implemented with two pairs of SMD resistors in series placed in parallel with each other, as shown in Figure 6 and detailed in Fig. 7. This configuration would be optimal because it is compact and low-cost. For example, for this purpose, standard 1206 size SMD resistors, rated for voltage values of at least 200V per resistor, can be used.

Thanks to the present invention, false detection of the closed-door lock condition is prevented, regardless of the insertion mode of the household appliance control power plug into the domestic power outlet and under normal operating conditions (without superimposed disturbances), while maintaining a high degree of immunity to conducted electromagnetic emissions at contained costs.

The preceding detailed description of the invention has been presented for illustrative and descriptive purposes. It is not intended to be exhaustive nor to limit the invention to the precise form disclosed. Many alternatives, modifications, and variations have been discussed above, and others will be apparent to those skilled in the art in light of the above teaching.

## Claims

1. Control circuit for a household appliance, particularly a washing machine, a dishwasher, or a dryer, comprising:
a plug for the electrical power supply of the control circuit which can be inserted in two different positions into a corresponding electrical power supply socket connected to a first power supply line (L1, N1) and a second power supply line (N1, L1) of the electrical distribution network;
an electrical ground line (G) electrically connected to said circuit;
wherein the control circuit is configured for connection to at least one electrical load of the household appliance, in particular at least a motor and/or its control/drive circuit (MCU/INVERTER),
wherein the control circuit is configured such that said at least one electrical load of the household appliance is powerable via said first power line (N1, L1) of the electrical distribution network through a first switch controlled by the door lock (DOOR_LOCK) of a door of the household appliance and via said second power line (L1, N1) of the electrical distribution network through a second switch (K003), so as to allow the disconnection of both said power supply lines (L1, N1) from said at least one electrical load of the household appliance;
a low voltage generator (VCC1);
a detection circuit (FB_DOOR LOCK) for detecting the state of the first switch controlled by the door lock (DOOR_LOCK) powered with the low voltage generator (VCC1),
a first capacitor (C39) electrically connected downstream of the motor power supply, between the motor and the electrical ground line (G) of the circuit,
**characterized in that**
the circuit further comprises a second capacitor (CX) electrically connected downstream of the first switch controlled by the door lock (DOOR_LOCK), between a sampling point of the detection circuit (FB_DOOR LOCK) for detecting the state of the first switch controlled by the door lock (DOOR_LOCK) and the low voltage generator (VCC1).

2. Control circuit for a household appliance according to claim 1, wherein:
a first terminal (3) of the second switch (K003) is electrically connectable to a phase line (L1) of the electrical distribution network, while the second terminal (4) of the second switch (K003) is electrically connected to the motor drive/control circuit (MCU/INVERTER) and/or to the motor itself providing it with a first electrical power supply when the second switch (K003) is closed and when the first terminal (3) of the second switch (K003) is electrically connected to the line (L1) of the electrical distribution network;
a first terminal (1) of the first switch controlled by the door lock (DOOR_LOCK) of the door of the household appliance is electrically connectable to a neutral line (N1) of the electrical distribution network, while the second terminal (2) of the first switch is electrically connected to the motor drive/control circuit (MCU/INVERTER) and/or to the motor itself providing it with a second electrical power supply when the first switch controlled by the door lock (DOOR_LOCK) of the door of the household appliance is closed and when the first terminal (1) of the first switch controlled by the door lock (DOOR_LOCK) of the door of the household appliance is electrically connected to the neutral line (N1) of the electrical distribution network.

3. Control circuit for a household appliance according to any of the preceding claims, further comprising:
a first control board (ACU BOARD) powerable via said plug for the electrical power supply of the control circuit;
a second control board (MCU BOARD) separate from the first and electrically connectable to said at least one electrical load of the household appliance, in particular to at least said motor drive/control circuit (MCU/INVERTER) and/or to the motor itself;
wherein the first control board is designed for powering the motor drive/control circuit (MCU/INVERTER) placed on the second control board, and/or the motor itself, via an electrical and logical connection between the two boards;
wherein the first control board is provided with the first switch controlled by the door lock (DOOR_LOCK) of the door of the household appliance, the second switch (K003), the low voltage generator (VCC1) and the detection circuit (FB_DOOR LOCK) of the state of the first switch controlled by the door lock (DOOR_LOCK),
and wherein the second control board is provided with the motor drive/control circuit (MCU/INVERTER).

4. Control circuit for a household appliance according to claim 3, wherein the second capacitor (CX) is positioned on the second board (MCU BOARD).

5. Control circuit for a household appliance according to any of the preceding claims, wherein the capacitance of the second capacitor (CX) is preferably about 220 nF, when the capacitance of the first capacitor (C39) is equal to 10nF, but in any case greater than that of the first capacitor (C39).

6. Control circuit for a household appliance according to any of the preceding claims, further comprising a resistor (R) in series with the second capacitor (CX), sized to limit the circuit initialization current, preferably with a value between 1 and 3 kOhm, preferably 2 kOhm.

7. Control circuit for a household appliance according to claim 6, wherein said resistor (R) in series with the second capacitor (CX), comprises two pairs of resistors in series, placed in parallel with each other.

8. Control circuit for a household appliance according to claim 7, wherein said resistor (R) in series with the second capacitor (CX), comprises SMD-type resistors rated for voltage values of at least 200V per resistor.

9. Control circuit for a household appliance according to claim 6, wherein said resistor (R) is a single Wire Wound type resistor.

10. Use of the control circuit of a household appliance according to any of the preceding claims, particularly for controlling a washing machine, a dryer, or a dishwasher, and for preventing a false detection of a door lock signal of the household appliance (FB_DOOR_LOCK) when the door is unlocked and under normal operating conditions of the household appliance, particularly when the plug for the electrical power supply of the control circuit is inserted into the corresponding electrical power supply socket in a first connection mode wherein:
a first terminal (1) of the first switch controlled by the door lock (DOOR_LOCK) is electrically connected to a neutral line (N1) of the electrical distribution network;
a second terminal (2) of the first switch controlled by the door lock (DOOR_LOCK) is electrically connected to the drive/control circuit of the motor of the washing machine, the dryer, or the dishwasher, and/or directly to the motor itself, providing it with a first electrical power supply when the first switch controlled by the door lock (DOOR_LOCK) is closed;
a first terminal (3) of the second switch (K003) is electrically connected to a phase line (L1) of the electrical distribution network;
a second terminal (4) of the second switch (K003) is connected to the motor drive/control circuit (MCU/INVERTER) and/or directly to the motor providing it with a second electrical power supply when the second switch (K003) is closed;
wherein the phase line (L1) of the electrical distribution network is electrically connected together with the low voltage circuit generator (VCC1);
wherein the neutral line (N1) of the electrical distribution network is in electrical connection with an electrical ground line (G),
**characterized in that** the detection circuit (FB_DOOR LOCK) for detecting the state of the first switch controlled by the door lock (DOOR_LOCK) detects an oscillating signal with an amplitude lower than a corresponding signal detectable when the first switch controlled by the door lock (DOOR_LOCK) and the second switch (K003) are both closed.

11. Method for controlling a washing machine, a dryer, or a dishwasher by means of a control circuit according to any of claims 1 to 9, **characterized in that** when the first switch controlled by the door lock (DOOR_LOCK) is open and also when the second switch (K003) is open, in a first connection mode of the plug for the electrical power supply of the control circuit into the electrical power supply socket or in a reversed connection mode and under normal operating conditions, the detection circuit of the state of the first switch controlled by the door lock (DOOR_LOCK) detects an oscillating signal which has an amplitude lower than a corresponding signal detectable when the first switch controlled by the door lock (DOOR_LOCK) and the second switch (K003) are both closed, and is discriminable relative thereto.
